# EUROPÄISCHE PATENTSCHRIFT

(11) **EP 0 864 020 B1**
(45) Veröffentlichungstag und Bekanntmachung des Hinweises auf die Patenterteilung: **19.04.2000**
(21) Anmeldenummer: 96945903.1
(22) Anmeldetag: 29.11.1996
(51) Int. Cl.: E04C 2/16

(54) **VERFAHREN ZUM HERSTELLEN VON BAMBUS ENTHALTENDEN BAUTEILEN, INSBESONDERE VON FÜR MÖBEL UND INNENAUSBAU VERARBEITBAREN BAMBUSLEIMPLATTEN, UND BAUTEILE AUS BAMBUS**
METHOD FOR MANUFACTURING STRUCTURAL MEMBERS CONTAINING BAMBOO, IN PARTICULAR BAMBOO BONDED PLATES USED FOR FURNITURE AND INTERNAL STRUCTURES, AND STRUCTURAL MEMBERS MADE OF BAMBOO
PROCEDE DE FABRICATION D'ELEMENTS CONSTITUTIFS CONTENANT DU BAMBOU, NOTAMMENT DES PLAQUES EN BAMBOU COLLEES POUVANT ETRE UTILISEES POUR DES MEUBLES ET L'AMENAGEMENT INTERIEUR, ET ELEMENTS CONSTITUTIFS EN BAMBOU

(30) Priorität: 30.11.1995 CN 95226664
(43) Veröffentlichungstag der Anmeldung: 16.09.1998
(73) Patentinhaber: Simon, Ralf, 97840 Hafenlohr (DE); Simon, Werner, 97828 Marktheidenfeld (DE); Ning, Zhou, Nanjing 210037 (CN)
(72) Erfinder: Simon, Ralf, 97840 Hafenlohr (DE); Simon, Werner, 97828 Marktheidenfeld (DE); Ning, Zhou, Nanjing 210037 (CN)
(74) Vertreter: Ruschke, Olaf, Dipl.-Ing.
(86) Internationale Anmeldenummer: DE9602292
(87) Internationale Veröffentlichungsnummer: WO9720115

(56) Entgegenhaltungen:
- DE-A- 2 117 918
- DE-A- 3 035 323
- DE-A- 4 020 682
- DE-U- 9 114 254
- FR-A- 743 754

## Beschreibung

Die Erfindung betrifft ein Verfahren zum Herstellen von Bambus enthaltenden Bauteilen, insbesondere von für Möbel und Innenausbau verarbeitbaren Bambusleimplatten, bei dem aus Bambushalmen im Querschnitt kreissegment-förmige, verhältnismäßig dünne, und jeweils eine Außen- und eine Innenhaut aufweisende Bambusstreifen gesägt und/oder gehobelt werden, die zu mindestens einer das Bauteil bildenden Schichtlage im wesentlichen parallel zueinander angeordnet und verleimt werden. Die Erfindung betrifft weiterhin ein nach diesem Verfahren hergestelltes Bauteil, insbesondere eine Bambusleimplatte, bestehend aus einer Vielzahl im Querschnitt kreissegment-förmiger, verhältnismäßig dünner, im wesentlichen parallel zueinander angeordneter und miteinander zu einer Schicht verleimter Bambusstreifen.

Bekannt ist ein Verfahren zur effektiven Nutzung von Bambus im Bauwesen, beispielsweise für tragende Teile der Baukonstruktion (DE 4020 682 A1), nachdem Bambusrohre längs zur Faser in lange, 0,5 bis 5 mm dünne Streifen geschält bzw. gehobelt werden, die dann wechselschichtig mit einem geeigneten Bindemittel im Flachpreßverfahren zunächst zu Platten gepreßt werden. In einem weiteren Arbeitsgang können die Platten lamellenförmig auf die gewünschte Dicke übereinander geleimt und dann auf die gewünschte Form zugeschnitten werden. Derartig hergestellte Werkstoffe werden für Parkettböden verwandt oder für den Möbelbau eingesetzt, berücksichtigen jedoch nicht das Problem der in den Bambusstreifen immanenten Spannung.

Bekannt ist auch ein Bauelement gemäß dem Bauteil der eingangs erwähnten Art (DE 3035 323 C 2), das aus mehreren Schichten versetzter und miteinander verleimter Bambusstreifen mit bis zu 10 cm Breite besteht. Die Bambusstreifen sind 2 bis 15 mm dick, durchgehend, erstrecken sich zumindestens über einen wesentlichen Teil der Länge des Bambuselementes und sind in jeweils einer Schicht im wesentlichen parallel zueinander angeordnet, wobei die Bambusstreifen benachbarter Schichten unter einem vorgegebenen Winkel, zum Beispiel von 90° verlaufen, um entsprechend den Erfordernissen im Baubereich bestimmte Belastungen besser aufnehmen zu können. Das Problem der in den einzelnen Bambusstreifen herrschenden Biegespannung findet bei diesem Stand der Technik keine besondere Berücksichtigung.

Die Erfindung konzentriert sich auf den Einsatz von Bambus im Bereich hochwertiger Produkte wie der Möbelherstellung und dem Innenausbau von Wohnungen wie z. B. Deckenverkleidungen, wobei es auf maßgenaue Verarbeitung vorbereiteter Bambusstreifen und deren fugenlose Zusammenfügung zu planen Oberflächen unter Berücksichtigung der Erfordernisse des Umwelt- und des Gesundheitsschutzes ankommt. Durch genaues Kalibrieren bei den einzelnen Fertigungsschritten ist sicherzustellen, daß das fertige Produkt auch den Ansprüchen für eine industrielle Weiterverarbeitung genügt, und daß insbesondere für die Einhaltung der jeweils erforderlichen Normen der geeignete Leim verwendet wird.

Herkömmlich (DE 40 20 682 A1) werden die im Querschnitt kreisförmigen Bambusrohre oder Bambushalme längs in Faserrichtung aufgespalten bzw. aufgesägt, wobei aufgrund der Knoten im Fasergewebe des Bambus im Querschnitt kreissegment-förmige Bambusstreifen als Ausgangsmaterial erzeugt werden, deren Innen und Außenhaut unterschiedliche Dichte aufweisen. Beim Hobeln und Sägen der Außen- und der Innenseite der Bambusstreifen in etwa tangentialem Ansatz jeweils zur Außenhaut und zur Innenhaut werden sogenannte Tangentialschnittflächen der Bambusstreifen gebildet, die deren Außenhaut bzw. Innenhaut zugeordnet sind, wobei die natürliche Spannung der Außenhaut der Bambusstreifen entfernt wird, was dazu führt, daß die aus dem Bambushalm fertig herausgearbeiteten Bambusstreifen infolge einer zu ihrer Innenseite gerichteten Biegespannung sich stets zur Innenseite hin biegen. Hinzu kommt, daß bei der Trocknung des Bambusmaterials an der Außenseite das geringere und an der Innenseite das größere Schwundmaß entstehen.

Während es bei den herkömmlichen, im Baubereich einsetzbaren Bauelementen aus mehreren Schichten verleimter und verpreßter Bambusstreifen (DE 30 35 323 C 2) auf die Auslegung für bestimmte Belastungen ankommt, wozu auch Verstärkungselemente wie Drahtgeflechte, Stahlseile oder Zinkstreifen zwischen die Schichten aus Bambusstreifen bei der Herstellung der Bauelemente gebracht werden, liegt der vorliegenden Erfindung die Aufgabe zugrunde, ein Verfahren der eingangs erwähnten Art bzw. ein Bauteil, insbesondere eine Bambusleimplatte der eingangs erwähnten Art zur Verfügung zu stellen derart, daß beidseitig plane, keinerlei Verwerfungen aufweisende, verhältnismäßig große Platten mit fugenlosen Oberflächen erzielbar sind, die zur Herstellung hochwertige Produkte wie Möbel, Deckenverkleidungen und Dekorationen für den Innenausbau geeignet und auch vom ästhetischen Gesichtspunkt her ansprechend sind. Diese Aufgabe wird erfindungsgemäß dadurch gelöst, daß die einzelnen Bambusstreifen etwa in der Ebene der Außenund der Innenhaut mit Tangentialschnittflächen versehen werden, wobei eine Biegespannung in jedem Bambusstreifen gebildet wird, die jeweils zu dessen der Innenhaut zugeordneten Tagentialflächen gerichtet ist, und daß die Bambusstreifen im Hinblick auf die Biegespannung in jedem Bambusstreifen abwechselnd so zueinander jeweils ausgerichtet und parallel zueinander angeordnet verleimt werden, daß sich die Biegespannungen benachbarter Bambusstreifen jeweils kompensieren und zumindestens eine in sich plane Schichtlage gebildet wird.

Die einzelnen Bambusstrukturen können erfindungsgemäß auch so hergestellt werden, daß die einzelnen Bambusstreifen etwa in der Ebene der Außen- und der Innenhaut mit Tangentialschnittflächen versehen werden, wobei die Biegespannung in jedem Bambusstreifen gebildet wird, die jeweils zu dessen der Innenhaut zugeordneten Tangentialfläche gerichtet ist, daß die Bambusstreifen im Hinblick auf die Biegespannung in jedem Bambusstreifen gleichsinnig ausgerichtet nebeneinander zu einer ersten Schichtlage verleimt werden, die mit einer entsprechend hergestellten zweiten Schichtlage, die zur ersten Schichtlage entgegengesetzt angeordnet wird, zu einem mindestens zweischichtigen Aufbau derart verbunden wird, daß sich die natürlichen Krümmungen jeder Schichtlage der paarweisen Anordnung gegeneinander aufheben.

Die mit dem erfindungsgemäßen Verfahren herstellbaren Bambusleimplatten sind flexibel einsetzbar, insbesondere bei der Verarbeitung zu hochwertigen Möbeln und dekorativen Decklagen, da sie als einschichtige, in sich plane und nicht zur Krümmung neigende Platten (sogenannte Form I) einzeln verwendbar und in paarweiser, gegeneinander gekehrter Gestaltung ( sogenannte Form II) insbesondere für den mehrschichtigen Plattenaufbau geeignet einsetzbar sind. So zeichnet sich die erwähnte Form I des erfindungsgemäßen Bauteils dadurch aus, daß die Baumbusstreifen so miteinander zu der Schichtlage verleimt sind, daß jeweils die der Innenhaut zugeordnete Tangentialschnittfläche und die der Außenhaut zugeordnete Tangentialschnittfläche benachbarter Bambusstreifen der Schichtlage miteinander verleimt sind, wobei sich die Biegespannung, die in jedem Bambusstreifen jeweils zu der der Innenhaut zugeordneten Tangentialschnittfläche ausgerichtet ist, im benachbarten Bambusstreifen kompensiert und die Schichtlage somit beidseitig plan ist.

Das erfindungsgemäße Bauteil gemäß Form I kann auch so ausgebildet sein, daß die Bambusstreifen so miteinander zu der Schichtlage verleimt sind, daß die der Außenhaut und der Innenhaut jedes Bambusstreifens zugeordneten Tangentialschnittflächen jeweils in einen der beiden Ebenen liegen, in der die Hauptflächen der Bambusplatten liegen, wobei die nebeneinander angeordneten Bambusstreifen im Hinblick auf die zur Tangetialschnittfläche, die der Innenhaut jedes Bambusstreifens zugeordnet ist, unter einer Biegespannung abwechselnd ausgerichtet verleimt sind, die Biegespannung benachbarter Bambusstreifen der Schichtlage sich kompensieren und letztere ohne Verwerfungen beidseitig plan ist.

Für die paarweise Gestaltung zeichnet sich das erfindungsgemäße Bauteil dadurch aus, daß die Bambusstreifen so miteinander zur ersten Schichtlage gleichsinnig ausgerichtet sind, daß benachbarte Bambusstreifen jeweils mit der der Außenhaut zugeordneten Tangentialschnittfläche und der der Innenhaut zugeordneten Tanentialschnittfläche fortlaufend verleimt sind, und daß die entsprechend ausgebildete zweite Schichtlage zur ersten Schichtlage entgegengesetzt gekehrt verleimt ist, wobei die natürliche Krümmung der Schichtlage der paarweisen Schichtanordnung kompensiert ist. Geeigneterweise kann eine Vielzahl derartiger paarweiser Schichtlagenanordnungen gleichsinnig übereinandergeschichtet werden.

Eine weitere vorteilhafte Gestaltung des erfindungsgemäßen Bauteils liegt darin, daß die Bambusstreifen so miteinander im Hinblick auf die Biegespannung in jedem Bambusstreifen, die zu der der Innenhaut des letzteren zugeordneten Tangentialschnittfläche ausgerichtet ist, gleichsinnig ausgerichtet und nebeneinander liegend zur ersten Schichtlage verleimt sind, daß die der Innenhaut der Bambusstreifen zugeordneten Tangentialschnittflächen in der einen Hauptfläche der ersten Schichtlage und die der Außenhaut der Bambusstreifen zugeordneten Tangentialschnittflächen in der anderen Hauptfläche der ersten Schichtlage liegen, und daß die entsprechend ausgebildete zweite Schichtlage entgegengesetzt gekehrt mit der ersten Schichtlage verleimt ist, wobei die Faserung der Bambusstreifen in beiden Schichtlagen unidirektional und die natürliche Krümmung jeder Schichtlage der paarweisen Schichtlagenanordnung kompensiert ist.

Eine Vielzahl der paarweisen Schichtlagenanordnung kann gleichsinnig und unidirektional übereinander geschichtet sein.

Für den Einsatzbereich der erfindungsgemäßen Bambusleimplatte bei Möbeln, Arbeitsplatten, Füllungen, Wand- und Deckenverkleidung hat sich als günstig erwiesen, daß zwischen der ersten und der zweiten Schichtlage der paarweisen ersten Schichtlagenanordnung eine identisch ausgebildete zweite Schichtlagenanordnung aus einer dritten, der ersten Schichtlage entsprechenden Schichtlage und einer vierten, der zweiten Schichtlage entsprechenden Schichtlage angeordnet und verleimt ist, wobei die Faserung der Bambusstreifen der dritten und der vierten Schichtlage jedoch jeweils 90° zu unidirektionalen Faserung der Bambusstreifen der ersten und der zweiten Schichtlage verläuft, die jeweils eine obere und eine untere Decklage für die zweite Schichtlagenanordnung bilden.

Ferner kann auf jeder Hauptfläche der erwähnten Schichtlagenanordnung eine untere bzw. eine obere Schichtlage aus Bambusstreifen aufgeleimt sein, deren Faserung unidirektional zueinander, vorzugsweise jedoch um 90° versetzt zur Faserung der Bambusstreifen der Schichtlage ist, was zu einer besseren Tragfähigkeit der Platte führt (und ferner steht die Platte besser in der Geradheit), wobei die Bambusstreifen der unteren Schicht so miteinander im Hinblick auf die Biegespannung in jedem Bambusstreifen, die zu der der Innenhaut letzterer zugeordneten Tangentialschnittfläche ausgerichtet ist, gleichsinnig ausgerichtet und nebeneinander liegend zu der unteren Schichtlage verleimt sind, wobei die der Innenhaut der Bambusstreifen zugeordneten Tangentialschnittflächen in der einen Hauptfläche der unteren Schichtlage und die der Außenhaut der Bambusstreifen zugeordneten Tangentialschnittflächen in der anderen Hauptfläche der unteren Schichtlage liegen, und wobei die entsprechend ausgebildete obere Schichtlage entgegengesetzt gekehrt zur unteren Schichtlage mit der oberen Hauptfläche der Schichtlagenanordnung verleimt ist.

Weitere vorteilhafte Ausgestaltungen des erfindungsgemäßen Bauteils ergeben sich aus den Patentansprüchen 3-22, wobei insbesondere auf die Anordnung einer mittigen Schichtlage bzw. einer Vielzahl von Schichtlagen aus Sperrholz oder Spanplatten aus verarbeiteten Bambusresten als Dämm-und/oder Füllstoffe zwischen Deckplatten der erfindungsgemäßen Gestaltung nach der oben genannten Form I und Form II verwiesen wird.

Abmessungsmäßig liegen die Dicke der symetrisch aufgebauten Bambusplatte zwischen 15 bis 30 mm, die Breite zwischen 100 bis 1200 mm, und die Länge zwischen 100 bis 4000 mm.

Die Breite der Bambusstreifen, die exakt aus der Wanddicke des Bambushalms ausgearbeitet sind, ist maximal wenig mehr als 25 mm.

Die Erfindung erstreckt sich auch auf die Anwendung der erfindungsgemäß hergstellten Bauteile nach der beschriebenen Gestaltung für Möbel, Arbeitsplatten, Füllungen, Rückwände und/oder Wand-und Deckenverkleidungen sowie für Dämmung, Schall- und/oder Wärmeschutz beim Innenausbau von Gebäuden.

Die Erfindung wird nun anhand der Zeichnungen erläutert. In diesen sind
- Fig. 1:: eine Querschnittsansicht eines Bambushalmes,
- Fig. 2:: eine perspektivische Darstellung einer Ausführungsform der Form I des Bauteils, die einzeln anwendbar ist,
- Fig. 3:: eine perspektivische Darstellung einer anderen Ausführungsform der Form I des Bauteils, die einzeln anwendbar ist,
- Fig. 4:: eine perspektivische Darstellung einer weiteren Ausführungsform des Bauteils, die paarweise anwendbar ist,
- Fig. 5:: eine perspektivische Darstellung einer Ausführungsform der Form II des Bauteils, die paarweise anwendbar ist,
- Fig. 6:: eine perspektivische Darstellung einer Ausführungsform des Bauteils, bei der die Form II gemäß Fig. 5 verwendet ist,
- Fig. 7:: eine perspektivische Darstellung einer weiteren Ausführungsform des Bauteils, bei der bei unidirektionaler Ausrichtung der Fasern der Bambusstreifen die Ausführungsform nach Fig. 6 übereinander geschichtet vorgesehen ist,
- Fig. 8:: eine perspektivische Darstellung einer Ausführungsform, bei der die Anordnung der Fig. 6 mit einer oberen und einer unteren Decklage gemäß Fig. 5 bei entgegengesetzt gekehrter Anordnung der oberen Decklage und Versetzung der Richtung der Fasern der Bambusstreifen der Decklagen um 90° zu der Richtung der Fasern der Mittellage gezeigt ist,
- Fig. 9:: eine perspektivische Darstellung einer Ausführungsform des Bauteils als Kombination der Form I und der Form II, wobei die Form I so gestaltet ist, daß die Bambusstreifen in ihrer Breite nebeneinander angeordnet und abwechselnd gegensinnig ausgerichtet miteinander zur Form I verleimt sind,
- Fig. 10:: eine der Fig. 9 entsprechende perspektivische Darstellung einer Ausführungsform des Bauteils als Kombination der Form I und der Form II derart, daß die Gestaltung der Form I gemäß Fig. 2 oder Fig. 3 in der Ausführungsform nach Fig. 6 vorgesehen ist, wobei die Faserung der Bambusstreifen der Mittellage um 90° zu der Faserung der Bambusstreifen der Decklagen versetzt ist,
- Fig. 11:: eine perspektivische Darstellung einer Ausführungsform des Bauteils entsprechend der Fig. 10, wobei jedoch die Faserung der Bambusstreifen der Mittellage und der beiden Decklagen unidirektional sind,
- Fig. 12:: eine perspektivische Darstellung einer Ausführungsform des Bauteils bei der, ausgehend von dem Aufbau gemäß Fig. 6, eine aus fünf verleimten Sperrholz- und/oder Spanplatten aus Bambus bestehende Mittellage vorgesehen ist,
- Fig. 13:: eine perspektivische Darstellung einer Ausführungsform des Bauteils bei der ausgehend vom Aufbau gemäß Fig. 6 eine Mittellage vorgesehen ist, die aus der Übereinanderschichtung der Form I gemäß Fig. 3 besteht, wobei die Faserung der Bambusstreifen der doppelschichtigen Mittellage um 90° zu der Faserung der Bambusstreifen der beiden Decklagen versetzt ist,
- Fig. 14:: eine perspektivische Darstellung einer Ausführungsform des Bauteils, bei dem eine Vielzahl der Gestaltungen gemäß Form I nach der Fig. 3 oder der Fig. 4 oder gemäß Form II nach Fig. 5 vorgesehen ist, die jedoch in paarweiser Anordnung übereinandergeschichtet und verleimt sind,
- Fig. 15:: eine perspektivische Darstellung einer Ausführungsform des Bauteils gemäß Fig. 10, bei der die die Mittellage bildende Gestaltung nach Form I durch eine Schicht aus Dämm- und/oder Füllstoffen ersetzt ist, und
- Fig. 16 und 17:: perspektivische Darstellungen weiterer Ausführungsformen des Bauteils.

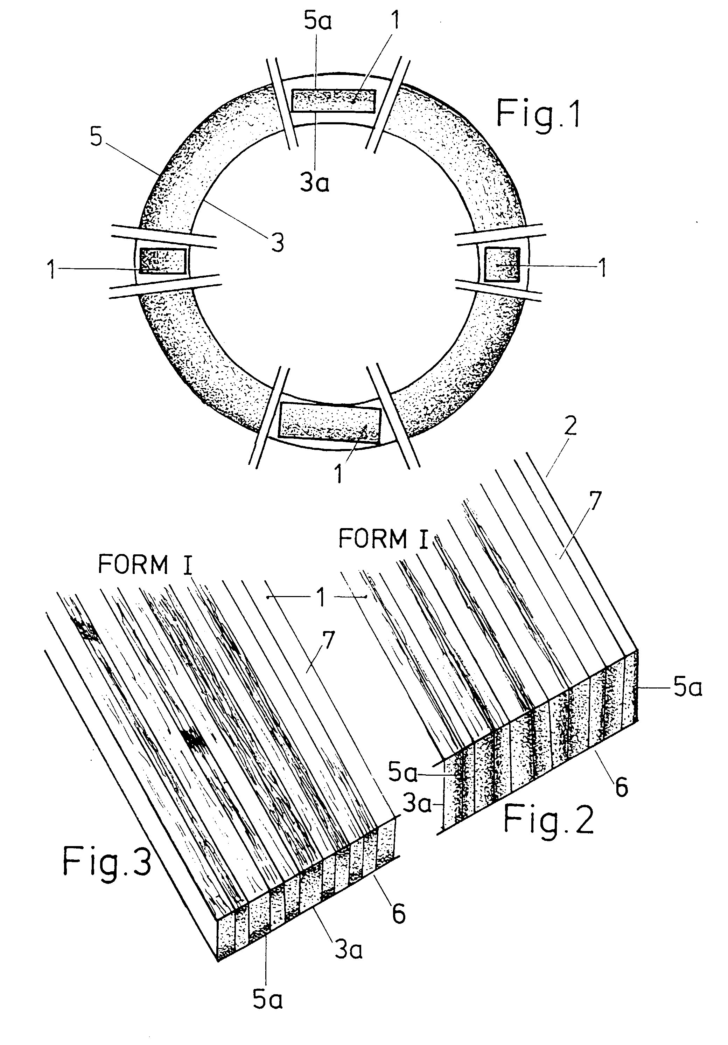

Die Fig. 1 zeigt den kreisförmigen Querschnitt eines Bambushalms, der längs der Faserrichtung zu vier in Querschnitt kreissegment-förmigen Bambusstreifen mit einer Innenhaut 3 und einer Außenhaut 5 aufgespalten ist. Die Breite der Bambusstreifen 1, die exakt aus der Wanddicke des Bambushalms 4 herausgearbeitet sind, ist maximal wenig mehr als 25 mm. Etwa sehnenförmig bzw. tangentialschnittförmig zur Innenhaut 3 und zur Außenhaut 5 werden die Bambusstreifen 1 gehobelt und geschliffen, wobei sich entsprechende Tangentialschnittflächen 3a bzw. 5a bilden. Bei dieser Bearbeitung verliert die Außenhaut 5 ihre natürliche Spannung, wodurch sich der fertige Bambusstreifen 1 stets unter einer zu der der Innenseite des Bambusstreifens 1 zugeordneten Tangentialschnittfläche 3a gerichteten Biegespannung biegt, die aufgrund der unterschiedlichen Dichten der Bambusstreifen im Bereich der Außen- und der Innenhaut 5 bzw. 3 hervorgerufen wird.

Fig. 2 zeigt in der Perspektive eine Ausführungsform des Bauteils in einer Gestaltung der sogenannten Form I, die einzeln verwendbar ist und bei der die Bambusstreifen 1 zur Kompensation der jeweiligen Biegespannung letzterer so miteinander zu einer Schichtlage 2 verleimt sind, daß jeweils die der Innenhaut 3 zugeordneten Tangentialschnittflächen 3a und die der Außenhaut 5 zugeordneten Tangentialschnittflächen 5a benachbarter Bambusstreifen 1 der Schichtlage 2 miteinander verleimt sind. Hierdurch wird die Biegespannung, die in jedem Bambusstreifen jeweils zu der der Innenhaut 3 zugeordneten Tangentialschnittfläche 3a ausgerichtet ist, im benachbarten Bambusstreifen 1 kompensiert, sodaß die Schichtlage 2 beidseitig plan ist.

Die einzeln verwendbare Schichtlage gemäß der Form I kann auch so gestaltet sein, wie es Fig. 3 zeigt. Hier sind die Bambusstreifen 1 so miteinander zu der Schichtlage 2 verleimt, daß die der Außenhaut 5 und der Innenhaut 3 jedes Bambusstreifens 1 zugeordneten Tangentialschnittflächen 5a bzw. 3a jeweils in einer der beiden Ebenen liegen, in der die Hauptflächen 6 bzw. 7 der Bambusplatte liegen. Die nebeneinander angeordneten Bambusstreifen 1 sind im Hinblick auf die zur Tangentialfläche 3a gerichtete Biegespannung abwechselnd ausgerichtet verleimt, wodurch sich die Biegespannung benachbarter Bambusstreifen der Schichtlage 2 kompensiert. Diese Ausführungsform der Form I ist ebenfalls beidseitig plan und fugenlos verleimt und weist keinerlei Verwerfungen auf.

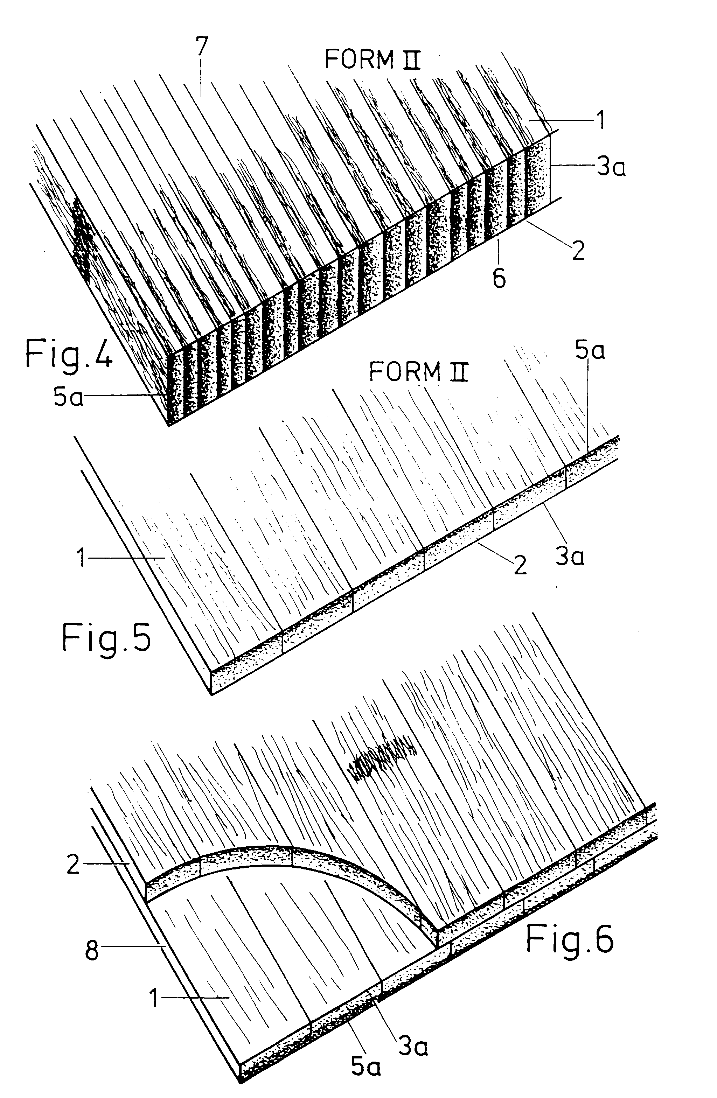

Die Fig. 4 und 5 zeigen Gestaltungen der Schichtlage 2 des Bauteils gemäß sogenannten Form II, die nur paarweise verwendbar ist, wie zum Beispiel Fig. 6 zeigt. So sind gemäß Fig. 4 die Bambusstreifen so miteinander zur Schichtlage 2 gleichsinng ausgerichtet, daß die benachbarten Bambusstreifen 1 jeweils mit der der Außenhaut 5 zugeordneten Tangentialschnittfläche 5a und der der Innenhaut 3 zugeordneten Tangentialschnittfläche 3a fortlaufend verleimt sind. Um die Wirkung der Biegespannung zu kompensieren muß in diesem Fall eine entsprechend ausgebildete Schichtlage 2 entgegengesetzt gekehrt an einer Stirnseite der ersten Schichtlage 2 verleimt werden.

Bei der Gestaltung der Form II der Schichtlage 2 gemäß Fig. 5 sind die Bambusstreifen 1 so miteinander im Hinblick auf die Biegespannung in jedem Bambusstreifen 1 gleichsinnig ausgerichtet und nebeneinander liegend zur Schichtlage 2 verleimt, daß die der Innenhaut 3 der Bambusstreifen 1 zugeordneten Tangentialschnittflächen 3a in der einen Hauptfläche 6 der Schichtlage 2 und die der Außenhaut 5 zugeordneten Tangentialschnittflächen 5a in der anderen Hauptfläche 7 der Schichtlage 2 liegen. Fig 6 zeigt, daß für die erforderliche paarweise Verwendung der Form II nach Fig. 5 eine entsprechend ausgebildete Form II an der Schichtlage 2 entgegengesetzt gekehrt auf der ersten Schichtlage 2 zu verleimen ist, wobei die Faserung der Bambusstreifen 1 in beiden Schichtlagen 2 unidirektional ist. Die natürliche Krümmung jeder Schichtlage 2 ist in dieser paarweisen Anordnung kompensiert.

Die Form II wird wegen ihres höheren dekorativen Wertes der Oberfläche bevorzugt als Deckenlage eingesetzt, so ist der Einsatz des Bauteils nach Fig. 6, bei dem sozusagen zwei Lagen der Form II mit der Innen- oder Außenseite gegeneinander verleimt sind, bevorzugt bei Rückwänden, Füllungen, sowie Wand- und Deckenverkleidungen vorgesehen.

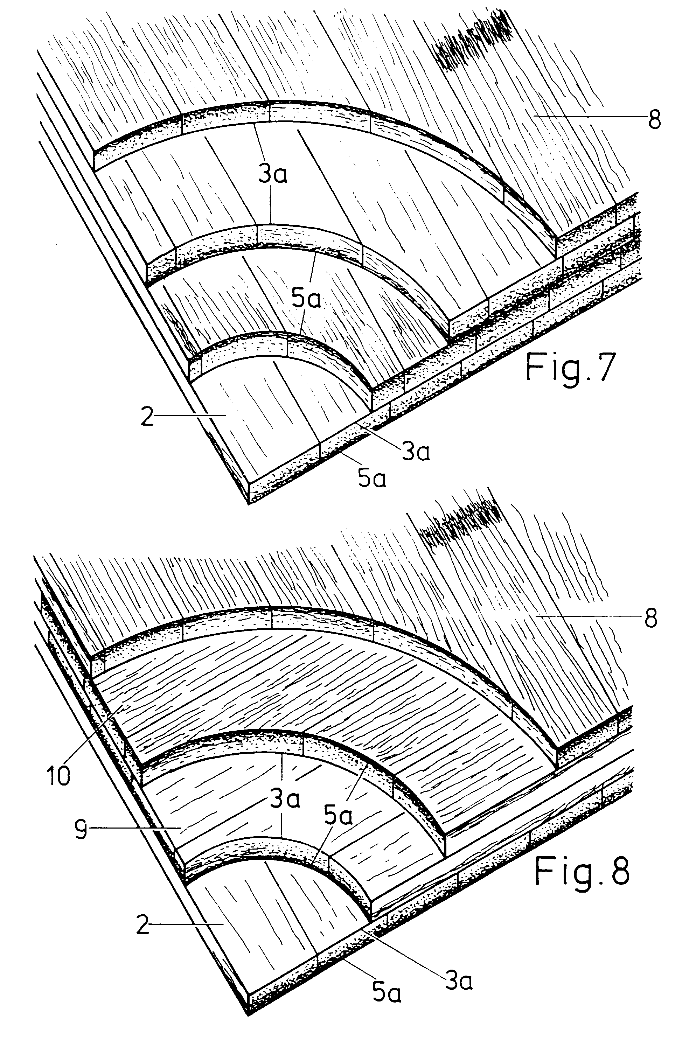

Nach Fig. 7 ist die mittels der Form II gestaltete paarweise Schichtlagenanordnung nach Fig. 6 gleichsinnig und unidirektional übereinander geschichtet. Der Einsatzbereich dieser Ausführungsform des Bauteils bezieht sich auf Möbel, Arbeitsplatten, Füllungen sowie Wand- und Deckenverkleidungen.

Fig. 8 verdeutlicht eine Kombination der Form II und der Form I, indem zwischen einer ersten und einer zweiten Schichtlage 2 bzw. 8 der paarweisen Schichtlagenanordnung 2, 8 gemäß Fig. 6 eine identisch ausgebildete zweite Schichtlagenanordnung 9,10 aus einer dritten, der ersten Schichtlage 2 entsprechenden Schichtlage 9 und einer vierten, der zweiten Schichtlage 8 entsprechenden Schichtlage 10 verleimt ist, wobei die Faserung der Bambusstreifen der dritten und der vierten Schichtlage 9 bzw. 10 jeweils um 90° zur unidirektionalen Faserung der ersten und der zweiten Schichtlage 2 bzw. 8 verläuft, die jeweils die obere und die untere Decklage für die zweite Schichtlagenanordnung 9,10 bilden. Fig. 8 verdeutlicht somit den bevorzugten Einsatz der Form II als Decklage, und diese Ausführungsform des Bauteils ist speziell für Möbel, Arbeitsplatten, Füllungen sowie Wand- und Deckenverkleidungen gedacht.

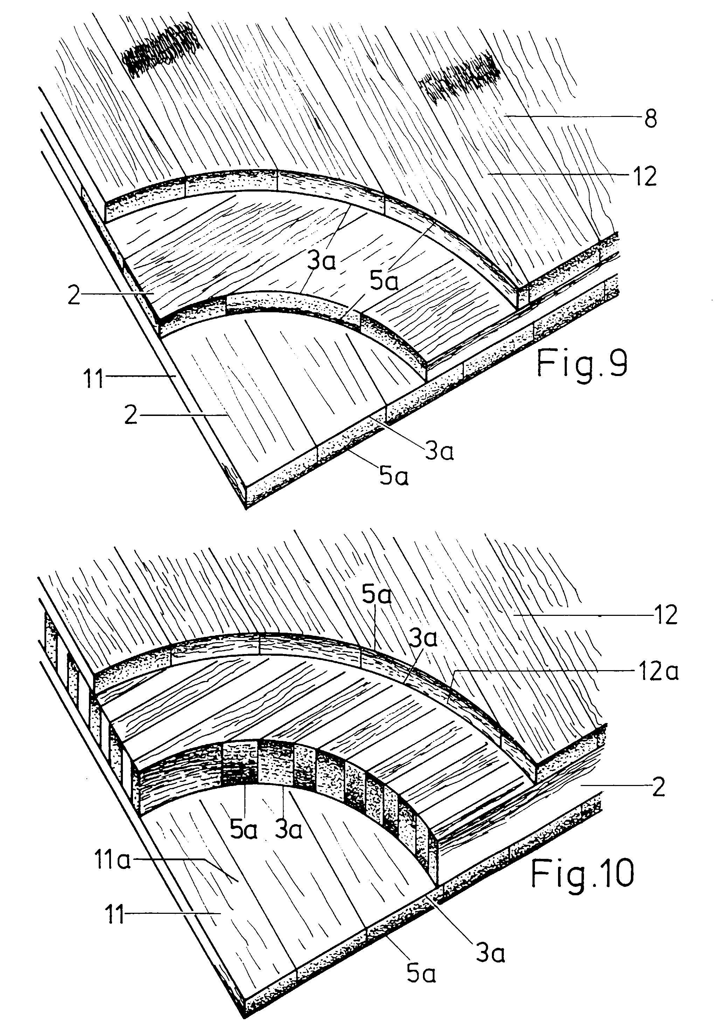

Aus Fig. 9 geht eine weitere Kombinationsmöglichkeit der Form II und der Form I hervor, indem zwischen einer paarweisen Schichtlagenanordnung 2,8 gemäß Fig. 6 eine der Fig. 3 entsprechenden Schichtlage 2 vorgesehen ist, bei der die Bambusstreifen 1 jedoch in ihrer Breite nebeneinander angeordnet sind. Die Faserung der Bambusstreifen der die Mittellage bildenden Schichtlage 2 ist hier um 90° versetzt zu der unidirektionalen Faserung der Bambusstreifen der unteren und der oberen Schichtlagen 11 bzw. 12, mit ihren jeweiligen Hauptflächen (11a, 12a) der paarweisen Schichtlagenanordnung 11,12 der Form II ausgerichtet.

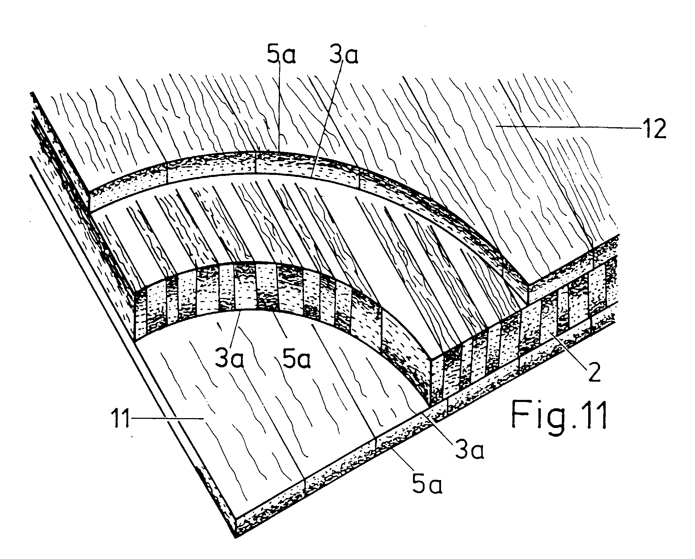

Fig. 10 zeigt eine der Fg. 9 ähnliche Ausführungsform des Bauteils, bei der jedoch eine größere Höhe des letzteren erreichbar ist. Für diesen Zweck sind die Bambusstreifen 1 so miteinander zu der Schichtlage 2 verleimt, daß die Breite der Bambusstreifen 1 das Höhenmaß der Schichtlage 2 bildet. Die Höhe der die Deckenlagen bildenden unteren und oberen Schichtlagen 11 bzw. 12 ist unverändert. Diese Ausführungsform findet bevorzugt bei der Rahmenbauweise von Möbeln, bei Wand- und Deckenverkleidungen sowie für Leisten und Stäbe Verwendung.

Fig. 11 verdeutlicht eine weitere Variante der Kombination der Form I und der Form II, indem zwischen der paarweisen Schichtlagenanordnung 11,12 gemäß Fig. 6 als Mittellage eine Schichtlage 2 gemäß Fig. 3 verleimt ist derart, daß die Breite der Bambusstreifen 1 das Höhenmaß der Schichtlage 2 bildet und die Faserung der Bambusstreifen 1 der Schichtlage 2 unidirektional zur Faserung der Bambusstreifen 1 der Schichtlagen 11,12 der verwendeten Form II verläuft. Diese Ausführungsform weist zwar eine etwas geringere Stabilität auf, besitzt jedoch durch den unidirektionalen Verlauf der Faserung der Bambusstreifen einen typischen Masivholzcharakter und ist vielseitig einsetzbar, wie z. B. bei der Rahmenbauweise von Möbeln, für Wand- und Deckenverkleidungen sowie für Leisten und Stäbe.

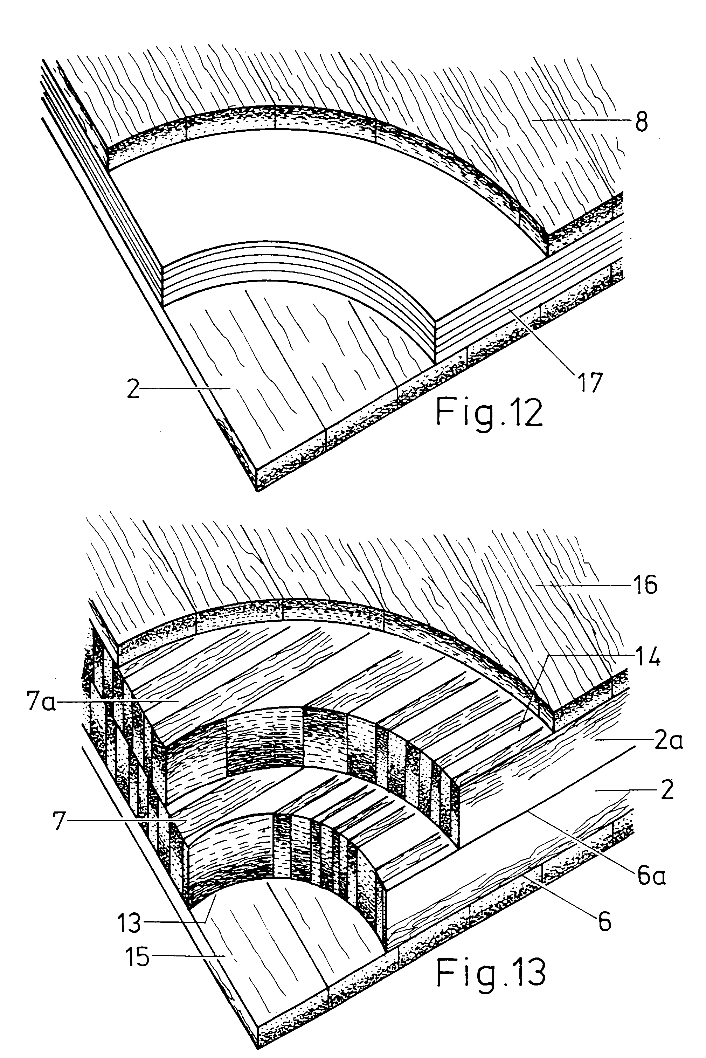

Aus Fig. 12 geht eine verhältnismäßig kostengünstige Ausführungsform des Bauteils hervor, bei der die Schichtlagen 2,8 teilweise nach Form I oder Form II gebildet sein können, und bei der zwischen der paarweisen Anordnung der ersten und der zweiten Schichtlagen aus Bambusstreifen fünf miteinander verleimte Sperrholzplatten oder Spanplatten 17 aus gepreßten Bambusresten als Mittellage vorgesehen sind, die an der Kante des Bauteils sichtbar ist. Diese günstige Version des Bauteils findet Einsatz für Möbelcorpi, Arbeitsplatten, Rückwände, Füllungen sowie Wand- und Deckenverkleidungen.

Fig. 13 zeigt eine Ausführungsform des Bauteils, bei der zwischen einer paarweisen Schichtlagenanordnung 15,16 der Form II zwei identisch ausgebildete, miteinander verleimte Schichtlagen 2,2a der Form I mit den Hauptflächen 6,7 bzw. 6a,7a gemäß Fig. 3 als Mittellagen vorgesehen sind, die mit ihren unteren und ihren oberen Auflageflächen 13,14 jeweils mit der entsprechenden Decklage 15 bzw. 16 verleimt sind. Die Faserung der Bambusstreifen 1 der beiden Schichtlagen 2, 2a ist hier unidirektional, jedoch um 90° versetzt zu der Faserung der Bambusstreifen 1 der beiden Decklagen 15,16. Diese Ausführungsform wird bevorzugt für den Rahmenbau, Abdeckplatten und Arbeitsplatten eingesetzt.

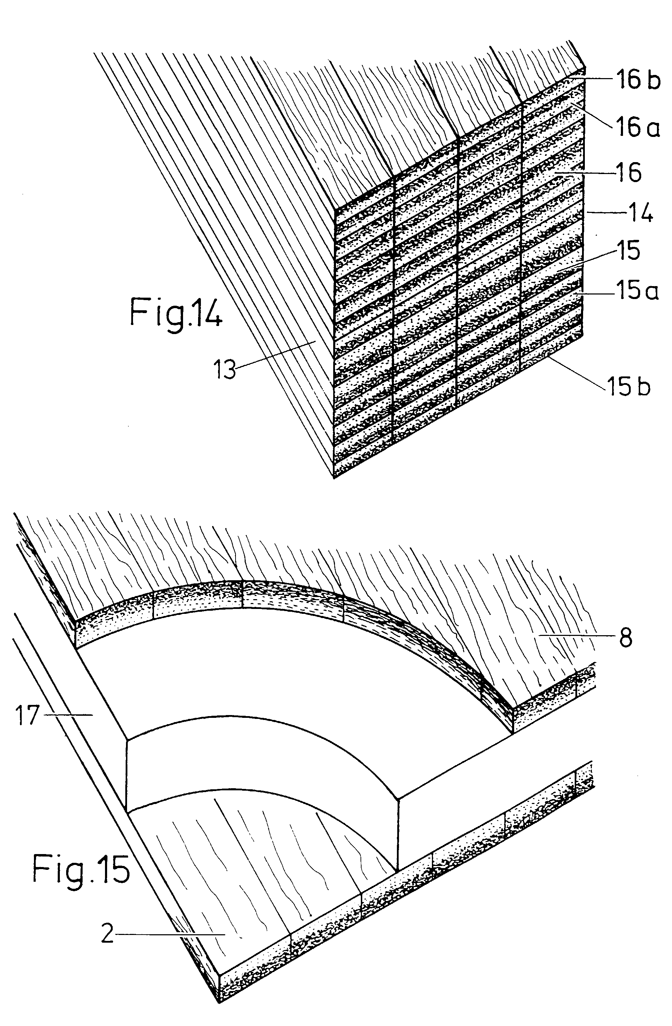

Bei der Ausführungsform des Bauteils nach Fig. 14 sind eine Viellzahl identisch ausgebildeter Schichtlagen 2 nach Form I unidirektional aufeinander verleimt. Anstelle von Schichtlagen in der Gestaltung nach Form I können jedoch auch wahlweise paarweise Schichtlagen der Form II aufeinander verleimt sein. 15a bzw. 15b und 16a bzw. 16b bezeichnen die Hauptflächen der Decklagen 15 und 16 dieser Ausführungsform. 13 und 14 bezeichnen Auflageflächen. Diese Ausführungsform eignet sich besonders für Möbel, Rahmenkonstruktionen, Stützen, Bambusvierkante, Leisten und Stäbe. Das Produkt kann im Kern auch mit Sperrholz- oder Spanplatten aus Bambusresten ausgeführt sein, was zwar die Stabilität etwas verringert, jedoch kostengünstiger ist. In diesem Fall ist der Einsatz für Möbel, Rahmen, Konstruktionen, Vierkantprofile und Dekorationen gedacht.

Eine weitere kostengünstige Variante des Bauteils zeigt Fig. 15 bei der zwischen den Schichtlagen 2,8, die wahlweise nach Form I oder Form II gestaltet sein können, eine Mittellage aus Dämm- oder Füllstoffen oder aus Platten mit gewünschten Eigenschaften vorgesehen ist. Diese Ausführungsform ist besonders für Dämm- sowie Schall- und Wärmeschutz geeignet.

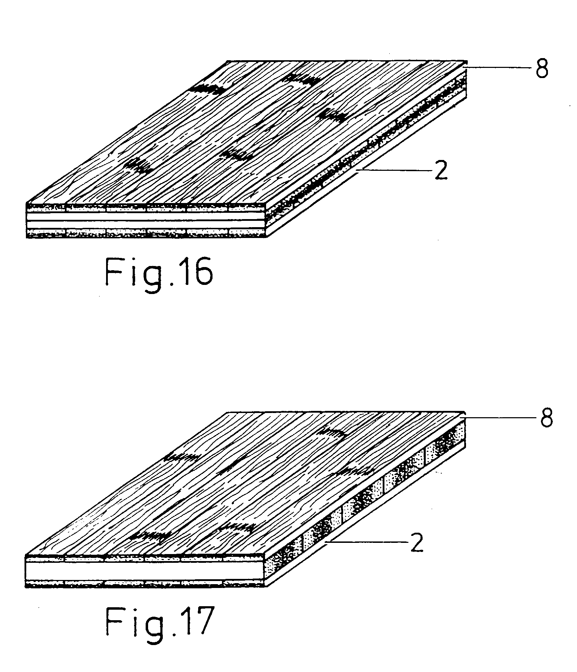

Die Fig. 16 und 17 zeigen perspektivische Darstellungen zweier weiterer Ausführungsformen, die der Ausführungsform nach Fig. 7 und 8 mit Schichtlagen 2,8 nach Form I und Form II entsprechend gestaltet sind, wobei die Oberflächen des Bauteils flach geschliffen oder gehobelt ist. Die Mittellage kann hier auch aus Schichten der Bambusstreifen bestehen, die aus Längsschnittflächen letzterer zusammengesetzt sind.

## Patentansprüche

1. Verfahren zum Herstellen von Bambus enthaltenden Bauteilen, insbesondere von für Möbel und Innenausbau verarbeitbaren Bambusleimplatten, bei dem aus Bambushalmen im Querschnitt kreissegment-förmige, verhältnismäßig dünne, jeweils eine Außen- und eine Innenhaut aufweisende Bambusstreifen gesägt und/oder gehobelt werden, die zu mindestens einer das Bauteil bildenden Schichtlage im wesentlichen parallel zueinander angeordnet und verleimt werden, dadurch gekennzeichnet, daß die einzelnen Bambusstreifen etwa in der Ebene der Außen- und der Innenhaut mit Tangentialschnittflächen versehen werden, wobei eine Biegespannung in jedem Bambusstreifen gebildet wird, die jeweils zu dessen der Innenhaut zugeordneten Tangentialschnittfläche gerichtet ist, und daß die Bambusstreifen im Hinblick auf die Biegespannung in jedem Bambusstreifen abwechselnd so zueinander jeweils ausgerichtet und parallel zueinander angeordnet verleimt werden, daß sich die Biegespannungen benachbarter Bambusstreifen jeweils kompensieren, und daß zumindest eine in sich plane Schichtlage gebildet wird.

2. Verfahren zum Herstellen von Bambus enthaltenden Bauteilen, insbesondere von für Möbel und Innenausbau verarbeitbaren Bambusleimplatten, bei dem aus Bambushalmen im Querschnitt kreissegment-förmige, verhältnismäßig dünne, jeweils eine Außen- und eine Innenhaut aufweisende Bambusstreifen gesägt und/oder gehobelt werden, die zu mindestens einer das Bauteil bildenden Schichtlage im wesentlichen parallel zueinander angeordnet und verleimt werden, worauf mehrere Schichtlagen übereinander angeordnet und verbunden werden, dadurch gekennzeichnet, daß die einzelnen Bambusstreifen etwa in der Ebene der Außen- und der Innenhaut mit Tangentialschnittflächen versehen werden, daß eine Biegespannung in jedem Bambusstreifen gebildet wird, die jeweils zu dessen der Innenhaut zugeordneten Tangentialschnittfläche gerichtet ist, daß die Bambusstreifen im Hinblick auf die Biegespannung in jedem Bambusstreifen gleichsinnig ausgerichtet nebeneinander zu einer ersten Schichtlage verleimt werden, die mit einer entsprechend hergestellten zweiten Schichtlage, die zur ersten Schichtlage entgegengesetzt angeordnet wird, zu einem mindestens zweischichtigen Aufbau derart verbunden wird, daß sich die natürlichen Krümmungen jeder Schichtlage der paarweisen Anordnungen gegeneinander aufheben.

3. Bauteil, insbesondere Bambusleimplatte, bestehend aus einer Vielzahl im Querschnitt kreissegment-förmiger, verhältnismäßig dünner, im wesentlichen parallel zueinander angeordneten und miteinander zu einer Schichtlage verleimter Bambusstreifen, hergestellt nach dem Verfahren gemäß Patentanspruch 1, dadurch gekennzeichnet, daß die Bambusstreifen (1) so miteinander zu der Schichtlage (2) verleimt sind, daß jeweils die der Innenhaut (3) zugeordnete Tangentialschnittfläche (3a) und die der Außenhaut (5) zugeordnete Tangentialschnittfläche (5a) benachbarter Bambusstreifen (1) der Schichlage (2) miteinander verleimt sind, und daß sich die Biegespannung, die in jedem Bambusstreifen jeweils zu der der Innenhaut (3) zugeordneten Tangentialschnittfläche (3a) ausgerichtet ist, in benachbarten Bambusstreifen (1) kompensiert und die Schichtlage (2) somit beidseitig plan ist (Fig. 2).

4. Bauteil, insbesondere Bambusleimplatte, bestehend aus einer Vielzahl im Querschnitt kreissegment-förmiger, verhältnismäßig dünner, im wesentlichen parallel zueinander angeordneter und miteinander zu einer Schichtlage verleimter Bambusstreifen, hergestellt nach dem Verfahren gemäß Patentanspruch 1, dadurch gekennzeichnet, daß die Bambusstreifen (1) so miteinader zu der Schichtlage (2) verleimt sind, daß die der Außenhaut (5) und der Innenhaut (3) jedes Bambusstreifens (1) zugeordneten Tangentialschnittflächen (5a bzw. 3a) jeweils in einer der beiden Ebenen liegen, in der die Hauptflächen (6, 7) der Bambusleimplatte liegen, daß die nebeneinander angeordneten Bambusstreifen (1) im Hinblick auf die zur Tangentialschnittfläche (3a, 5a), die der Innenhaut (3) und der Außenhaut (5) jedes Bambusstreifens (1) zugeordnet ist, unter einer Biegespannung abwechselnd ausgerichtet verleimt sind, und daß die Biegespannung benachbarter Bambusstreifen (1) der Schichtlage (2) sich kompensieren und die Schichtlage (2) ohne Verwerfungen beidseitig plan ist (Fig. 3).

5. Bauteil, insbesondere Bambusleimplatte, bestehend aus einer Vielzahl im Querschnitt kreissegment-förmiger, verhältnismäßig dünner, im wesentlichen parallel zueinander angeordneter und zu einer ersten Schichtlage verleimter Bambusstreifen, die mit einer entsprechend ausgebildeten zweiten Schichtlage verbunden ist, hergestellt nach dem Verfahren gemäß Patentanspruch 2, dadurch gekennzeichnet, daß die Bambusstreifen (1) so miteinander zur ersten Schichtlage (2) gleichsinnig ausgerichtet sind, daß benachbarte Bambusstreifen (1) jeweils mit der der Außenhaut (5) zugeordneten Tangentialschnittfläche (5a) und der der Innenhaut (3) zugeordneten Tangentialschnittfläche (3a) fortlaufend verleimt sind, daß die entsprechend ausgebildete zweite Schichtlage (8) zur ersten Schichtlage (2) entgegengesetzt gekehrt verleimt ist, und daß die natürliche Krümmung jeder Schichtlage (2,8) der paarweisen Schichtlagenanordnung kompensiert ist (Fig. 6).

6. Bauteil nach Anspruch 5, dadurch gekennzeichnet, daß eine Vielzahl paarweiser Schichtlagenanordnungen (2,8) gleichsinnig übereinander geschichtet ist.

7. Bauteils insbesondere Bambusleimplatte, bestehend aus einer Vielzahl im Querschnitt kreissegment-förmiger, verhältnismäßig dünner, im wesentlichen parallel zueinander angeordneter und zu einer ersten Schichtlage verleimter Bambusstreifen, die mit einer entsprechend ausgebildeten zweiten Schichtlage verleimt ist, hergestellt nach dem Verfahren gemäß Patentanspruch 2, dadurch gekennzeichnet, daß die Bambusstreifen (1) so miteinander im Hinblick auf die Biegespannung in jedem Bambusstreifen (1), die zu der der Innenhaut (3) der letzteren zugeordneten Tangentialschnittfläche (3a) ausgerichtet ist, gleichsinnig ausgerichtet und nebeneinander liegend zur ersten Schichtlage (2) verleimt sind, daß die der Innenhaut (3) der Bambusstreifen (1) zugeordnete Tangentialschnittflächen (3a) in der einen Hauptfläche (6) der ersten Schichtlage (2) und die der Außenhaut (5) der Bambusstreifen (1) zugeordneten Tangentialschnittflächen (5a) in der anderen Hauptfläche (7) der ersten Schichtlage (2) liegen, daß die entsprechend ausgebildete zweite Schichtlage (8) entgegengesetzt gekehrt mit der ersten Schichtlage (2) verleimt ist, und daß die Faserung der Bambusstreifen (1) in beiden Schichtlagen (2,8) unidirektional und die natürliche Krümmung jeder Schichtlage (2,8) in der paarweisen Schichtlagenanordnung kompensiert ist (Fig. 5 und 6).

8. Bauteil nach Anspruch 7, dadurch gekennzeichnet, daß eine Vielzahl paarweiser Schichtlagenanordnungen gleichsinnig und unidirektional übereinander geschichtet ist (Fig. 7).

9. Bauteil nach Anspruch 7, dadurch gekennzeichnet, daß zwischen der ersten und der zweiten Schichtlage (2,8) der paarweisen ersten Schichtlagenanordnung (2,8) eine identisch ausgebildete zweite Schichtlagenanordnung (9, 10) aus einer dritten, der ersten Schichtlage (2) entsprechenden Schichtlage (9) und einer vierten, der zweiten Schichtlage (8) entsprechenden Schichtlage (10) angeordnet und verleimt ist, und daß die Faserung der Bambusstreifen (1) der dritten und der vierten Schichtlage (9, 10) jeweils um 90° zur unidirektionalen Faserung der ersten und der zweiten Schichtlage (2, 8) verläuft, die jeweils eine obere und eine untere Decklage für die zweite Schichtlagenanordnung (9,10) bilden (Fig. 8).

10. Bauteil nach Anspruch 4, dadurch gekennzeichnet, daß auf jeder Hauptfläche (6,7) der Schichtlage (2) eine untere bzw. eine obere Schichtlage (11, 12) aus Bambusstreifen (1) aufgeleimt ist, deren Faserung unidirektional zueinander und um 90° versetzt zur Faserung der Bambusstreifen (1) der Schichtlage (2) ist, daß die Bambusstreifen (1) der unteren Schichtlage (11) so miteinander im Hinblick auf die Biegespannung in jedem Bambusstreifen (1), die zu der der Innenhaut (3) letzterer zugeordneten Tangentialschnittfläche (3a) ausgerichtet ist gleichsinnig ausgerichtet und nebeneinander liegend zu der unteren Schichtlage (11) verleimt sind, daß die der Innenhaut (3) der Bambusstreifen (1) zugeordneten Tangentialschnittflächen (3a) in der einen Hauptfläche (11a) der unteren Schichtlage (11) und die der Außenhaut (5) der Bambusstreifen (1) zugeordneten Tangentialschnittflächen (5a) in der anderen Hauptfläche (11b) der unteren Schichtlage (11) liegen, und daß die entsprechend ausgebildete obere Schichtlage (12) entgegengesetzt gekehrt zur unteren Schichtlage (11) mit der oberen Hauptfläche (7) der Schichtlage (2) verleimt ist (Fig. 9 und 10).

11. Bauteil nach Anspruch 10, dadurch gekennzeichnet, daß die Bambusstreifen (1) so miteinander in der Schichtlage (2) verleimt sind, daß die Breite der Bambusstreifen (1) das Höhenmaß der Schichtlage (2) bildet, während die Höhe der die Deckenlagen der Schichtlage (2) bildenden unteren und oberen Schichtlagen (11 bzw. 12) unverändert ist (Fig. 10).

12. Bauteil nach Anspruch 4, dadurch gekennzeichnet, daß auf jeder Hauptfläche (6 ,7) der Schichtlage (2) eine untere bzw. eine obere Schichtlage (11 bzw. 12) aus Bambusstreifen (1) aufgeleimt ist, deren Faserung unidirektional zueinander und zur Faserung der Bambusstreifen (1) der Schichtlage (2) ist, daß die Bambusstreifen (1) so miteinander in der Schichtlage (2) verleimt sind, daß die Breite der Bambusstreifen (1) das Höhenmaß der Schichtlage (2) bildet, daß die Bambusstreifen (1) der unteren Schichtlage so miteinander im Hinblick auf die Biegespannung in jedem Bambusstreifen (1), die zu der der Innenhaut (3) letzterer zugeordneten Tangentialschnittfläche (3a) ausgerichtet ist, gleichsinnig ausgerichtet und nebeneinander liegend zu der unteren Schichtlage (11) verleimt sind, daß die der Innenhaut (3) der Bambusstreifen (1) zugeordneten Tangentialschnittflächen (3a) in der einen Hauptfläche (11a) der unteren Schichtlage (11) und die der Außenhaut (5) der Bambusstreifen (1) zugeordneten Tangentialschnittflächen (5a) in der anderen Hauptfläche (11b) der unteren Schichtlage (11) liegen, und daß die entsprechend ausgebildete obere Schichtlage (12) entgegengesetzt gekehrt zur unteren Schichtlage (11) mit der oberen Hauptfläche (7) der Schichtlage (2) verleimt ist (Fig. 11).

13. Bauteil nach Anspruch 7, dadurch gekennzeichnet, daß zwischen der ersten und der zweiten Schichtlage (2, 8) mindestens eine Sperrholzplatte (17) oder eine Spanplatte (17) aus Bambus mit gleichem Grundriß wie die Schichtlagen (2, 8) mit diesen verleimt ist (Fig. 12).

14. Bauteil nach Anspruch 13, dadurch gekennzeichnet, daß eine Vielzahl an übereinander geschichteten und verleimten Sperrholzplatten (17) oder Spanplatten (17) aus Bambus zwischen der ersten und der zweiten Schichtlage (2 bzw. 8) verleimt ist (Fig. 12).

15. Bauteil, insbesondere Bambusleimplatte, bestehend aus einer Vielzahl im Querschnitt kreissegment-förmiger, verhältnismäßig dünner, im wesentlichen parallel zueinander angeordneter und miteinander zu einer Schichtlage verleimter Bambusstreifen, hergestellt nach dem Verfahren gemäß Patentanspruch 1, dadurch gekennzeichnet, daß zwei identisch ausgebildete Schichtlagen (2, 2a) übereinander angeordnet und miteinander verleimt sind, in denen die Bambusstreifen (1) unidirektional und jeweils so miteinander zu der Schichtlage (2, 2a) verleimt sind, daß die der Außenhaut (5) und der Innenhaut (3) jedes Bambusstreifens (1) zugeordneten Tangentialschnittflächen (5a bzw. 3a) jeweils in einer der beiden Ebenen liegen, in der die Hauptflächen (6, 6a bzw. 7, 7a) der jeweiligen Schichtlage (2, 2a) liegen, daß die zueinander angeordneten Bambusstreifen (1) im Hinblick auf die zur Tangentialschnittfläche (3a), die der Innenhaut dieses Bambusstreifens zugeordnet ist, unter einer Biegespannung abwechselnd ausgerichtet verleimt sind, daß die Biegespannungen benachbarter Bambusstreifen (1) jeder der Schichtlagen (2, 2a) sich kompensieren und die Schichtlagen ohne Verwerfungen jeweils beidseitig plan sind, daß auf der unteren und auf der oberen Auflagefläche (13, 14) des aus den beiden Schichtlagen (2, 2a) bestehenden Aufbaus jeweils eine identisch ausgebildete, eine Decklage bildende Schichtlage (15, 16) zueinander entgegengesetzt gekehrt aufgeleimt ist, daß die Faserung ihrer Bambusstreifen (1) unidirektional und zur Faserung der Bambusstreifen (1) des Aufbaus aus den Schichtlagen (2, 2a) um 90° versetzt ist, daß die Bambusstreifen (1) in jeder Schichtlage ( 15, 16) so miteinander im Hinblick auf die Biegespannung in jedem Bambusstreifen (1), die zu der der Innenhaut letzterer zugeordneten Tangentialschnittfläche (3a) ausgerichtet ist, gleichsinnig ausgerichtet und nebeneinander liegend jeweils zur Schichtlage (15 bzw. 16) verleimt sind, und daß die der Innenhaut (3) der Bambusstreifen (1) zugeordneten Tangentialschnittflächen (3a) in der einen Hauptfläche (15a bzw. 16a) der Schichtlage (15 bzw. 16) und die der Außenhaut (5) der Bambusstreifen (1) zugeordneten Tangentialschnittflächen (5a) in der anderen Hauptfläche (15b bzw. 16b) der Schichtlage (15 bzw. 16) liegen (Fig. 13 und 14).

16. Bauteil nach Anspruch 15, dadurch gekennzeichnet, daß die Faserung der Bambusstreifen (1) in den die Decklage bildenden Schichtlagen (15, 16) unidirektional mit der Faserung der Bambusstreifen (1) in den den Zwischenaufbau bildenden Schichtlagen (2, 2a) ist.

17. Bauteil, insbesondere Bambusleimplatte, bestehend aus einer Vielzahl im Querschnitt kreissegment-förmiger, verhältnismäßig dünner, im wesentlichen parallel zueinander angeordneter und miteinander zu mindestens einer Schichtlage verleimter Bambusstreifen, hergestellt nach dem Verfahren gemäß Patentanspruch 1, dadurch gekennzeichnet, daß eine Vielzahl identisch ausgebildeter Schichtlagen übereinander angeordnet und verleimt ist, daß die Faserung der Bambusstreifen (1) der Schichtlagen (2) unidirektional ist und die Bambusstreifen (1) in jeder Schichtlage zu dieser so miteinander verleimt sind, daß die der Außenhaut (5) und der Innenhaut (3) jedes Bambusstreifens (1) zugeordneten Tangentialschnittflächen (5a bzw. 3a) jeweils in einer der beiden Ebenen liegen, in der die Hauptfläche (6,7) der Bambusleimplatte liegt, daß die nebeneinander angeordneten Bambusstreifen (1) im Hinblick auf die zur Tangentialschnittfläche (3a), die der Innenhaut (3) jedes Bambusstreifens zugeordnet ist, unter einer Biegespannung abwechselnd ausgerichtet verleimt sind, daß die Biegespannungen benachbarter Bambusstreifen der Schichtlagen (2) sich kompensieren und letztere ohne Verwerfungen beidseitig plan sind (Fig. 15).

18. Bauteil nach Anspruch 17, dadurch gekennzeichnet, daß mittig der Aufbau aus der Vielzahl der identischen Schichtlagen mehrere Sperrholzoder Spanplatten (17) vorgesehen und miteinander sowie mit der angrenzenden Schichtlage (2) verleimt sind.

19. Bauteil nach Anspruch 7 und 9, dadurch gekennzeichnet, daß dies Schichtlagenanordnung (9, 10) zwischen der ersten und der zweiten Schichtlage (2,8) von Dämm- und/oder Füllstoffen gebildet ist (Fig. 15).

20. Bauteil nach einem der Anspruche 3 bis 19, dadurch gekennzeichnet, daß die Bambusleimplatte symmetrisch aufgebaut ist.

21. Bauteil nach einem der Ansprüche 3 bis 20, dadurch gekennzeichnet, daß die Dicke der symmetrisch aufgebauten Bambusleimplatte zwischen 15 bis 30 mm, die Breite zwischen 100 bis 1200 mm und die Länge zwischen 100 bis 4000 mm liegen.

22. Bauteil nach einem der Ansprüche 3 bis 21, dadurch gekennzeichnet, daß die Breite der Bambusstreifen (1), die exakt aus der Wanddicke des Bambushalms ausgearbeitet sind, maximal wenig mehr als 25 mm ist.

23. Anwendung des nach dem Verfahren gemäß Patentanspruch 1 hergestellten Bauteils gemäß den Patentansprüchen 3 bis 22 für Möbel, Abeitsplatten, Füllungen, Rückwände und/oder Wand- und Deckenverkleidungen beim Innenausbau von Gebäuden.

24. Anwendung des Bauteils gemäß den Ansprüchen 3-22 für Dämmung, Schall-und/oder Wärmeschutz beim Innenausbau von Gebäuden.

## Claims

1. Manufacturing process for components containing bamboo, particularly for laminated bamboo panels processable to furniture and elements for the completion of the interior of buildings, in which bamboo canes are sawed and/or planed into relatively thin bamboo stripes with an inner and outer skin and a cross-section of the segment of a circle, which are arranged basically parallel to each other and glued together to form at least one of the layers making up the component, characterized in that the edges of the individual bamboo stripes are cut tangentially approximately in the plane of the inner and outer skin creating a bending stress in each bamboo stripe which is directed to the tangential cut edge pertaining to the inner skin of the stripe and in that the bamboo stripes are, in terms of the bending stress in each bamboo stripe, alternately oriented to each other and glued together in parallel arrangement in such a way that the bending stresses of adjoining stripes compensate or counterbalance each other forming at least one layer which is level in itself.

2. Manufacturing process for components containing bamboo, particularly for laminated bamboo processable to furniture and elements for the completion of the interior of buildings, in which bamboo canes are sawed and/or planed into relatively thin bamboo stripes with an inner and outer skin and a cross-section of the segment of a circle, which are arranged basically parallel to each other and glued together to form at least one of the layers making up the component, characterized in that the edges of the individual bamboo stripes are cut tangentially approximately in the plane of the inner and outer skin, that in each bamboo stripe a bending stress is created which is directed to the tangential cut edge pertaining to the inner skin of the stripe, that the bamboo stripes are, in terms of the bending stress in each bamboo stripe, equidirectionally arranged side by side and glued together to form a first layer which is joined with an accordingly manufactured second layer which is arranged inversely to the first layer to form a structure of at least two layers in which the natural bends of each layer of such paired structure counterbalance.

3. Component, particularly laminated bamboo panel, consisting of a multitude of relatively thin bamboo stripes of a cross-section of the segment of a circle which are arranged basically parallel to each other and glued together to form a layer manufactured according to the process described in patent claim 1, characterized in that the bamboo stripes (1) are glued to form the layer (2) in such a way that in adjoining bamboo stripes (1) of the layer (2), each tangential cut edge (3a) pertaining to the inner skin (3) is glued to a tangential cut edge (5 a) pertaining to the outer skin (5) and in that the bending stress which is in each stripe directed to the tangential cut edge (3 a) pertaining to the inner skin (3), is counterbalanced by the adjoining bamboo stripes (1) thus resulting in a layer (2) which is level on both sides. (Fig.2).

4. Component, particularly laminated bamboo panel, consisting of a multitude of relatively thin bamboo stripes of a cross-section of the segment of a circle which are arranged basically parallel to each other and glued together to form a layer, manufactured according to the process described in patent claim 1, characterized in that the bamboo stripes (1) are glued to form the layer (2) in such a way that the tangential cut edges (5a and 3a) pertaining to the outer skin (5) and to the inner skin (3) of each bamboo stripe (1) are arranged to be in one of the two planes of the main surfaces (6, 7) of the laminated bamboo panel, that the bamboo stripes (1) arranged side by side are, in terms of the tangential cut edge (3a, 5a) pertaining to the inner skin (3) and to the outer skin (5) of each bamboo stripe (1), glued together alternately oriented under a bending stress and that the bending stresses of adjoining bamboo stripes (1) of the layer (2) counterbalance and the layer (2) is level on both sides without warps (Fig. 3).

5. Component, particularly laminated bamboo panel, consisting of a multitude of relatively thin bamboo stripes of a cross-section of the segment of a circle which are arranged basically parallel to each other and glued together to form a first layer which is joined with an accordingly structured second layer manufactured according to the process described in patent claim 2, characterized in that the bamboo stripes (1) are oriented equidirectionally to form the first layer (1) in such a way that adjoining bamboo stripes (1) are consecutively glued together with the tangential cut edge (5a) pertaining to the outer skin (5) to the tangential cut edge (3a) pertaining to the inner skin (3), that the accordingly structured second layer (8) is inversely glued to the first layer (2) and that the natural bend of each layer (2, 8) of the paired layer structure is counterbalanced (Fig. 6)

6. Component according to claim 5, characterized in that a multitude of paired layer structures (2, 8) is equidirectionally disposed in layers, one on top of the other.

7. Component, particularly laminated bamboo panel, consisting of a multitude of relatively thin bamboo stripes of a cross-section of the segment of a circle which are arranged basically parallel to each other and glued together to form a first layer which is glued to an accordingly structured second layer manufactured according to the process described in patent claim 2, characterized in that the bamboo stripes (1) are, in terms of the bending stress in each bamboo stripe (1) which is directed to the tangential cut edge (3a) pertaining to the inner skin (3) of the latter, glued in equidirectional orientation and lying side by side to form the first layer (2) in such a way that the tangential cut edges (3 a) pertaining to the inner skin (3) of the bamboo stripes (1) lie in one of the main surfaces (6) of the first layer (2) and the tangential cut edges (5 a) pertaining to the outer skin (5) of the bamboo stripes (1) lie in the other of the main surfaces (6) of the first layer (2), that the accordingly structured second layer (8) is inversely glued to the first layer (2) and that the fibres or grain of the bamboo stripes (1) in both layers (2, 8) are unidirectional and the natural bend of each layer (2, 8) of the paired layer structure is counterbalanced (Fig. 5 and 6).

8. Component according to claim 7, characterized in that a multitude of paired layer structures is equidirectionally and unidirectionally disposed in layers, one on top of the other (Fig. 7)

9. Component according to claim 7, characterized in that between the first and the second layer (2, 8) of the first paired layer structure (2, 8), a second, identically structured paired layer structure (9, 10) consisting of a third layer (9) which corresponds to the first layer (2) and a fourth layer (10) which corresponds to the second layer (8), is arranged and glued, and that the fibre or grain of the bamboo stripes (1) of the third and fourth layer (9, 10) runs at an angle of 90° to the unidirectional grain of the first and second layer (2, 8) each of which forms a top and bottom cover layer for the second layer structure (9, 10) (Fig. 8).

10. Component according to claim 4, characterized in that onto each main surface (6, 7) of the layer (2), a bottom and top layer (11, 12) made from bamboo stripes (1) is glued, the grain of which runs unidirectionally to each other and at an angle of 90° to the grain of the bamboo stripes (1) of the layer (2), that the bamboo stripes (1) of the bottom layer (11) are, in terms of the bending stress in each bamboo stripe (1) which is directed to the inner skin (3) of the tangential cut edge (3a) pertaining to the latter, oriented equidirectionally and glued together lying side by side to form the bottom layer (11) in such a way that the tangential cut edges (3a) pertaining to the inner skin (3) of the bamboo stripes (1) lie in one main surface (11a) of the bottom layer (11) and the tangential cut edges (5a) pertaining to the outer skin (5) of the bamboo stripes (1) lie in the other main surface (11b) of the bottom layer (11), and that the accordingly structured top layer (12) is glued to the upper main surface (7) of the layer (2) inversely to the bottom layer (11) (Fig. 9 and 10).

11. Component according to claim 10, characterized in that the bamboo stripes (1) are glued together in the layer (2) in such a way that the width of the bamboo stripes (1) constitutes the thickness of the layer (2) while the thickness of the top and bottom layers (11, 12) forming the cover layers of the layer (2) remains unchanged (Fig. 10).

12. Component according to claim 4, characterized in that onto each main surface (6, 7) of the layer (2), a bottom and top layer (11, 12) made from bamboo stripes (1) is glued, the grain of which runs unidirectionally to each other and to the grain of the bamboo stripes (1) of the layer (2), that the bamboo stripes (1) are glued together in the layer (2) in such a way that the width of the bamboo stripes (1) constitutes the thickness of the layer (2), that the bamboo stripes (1) of the bottom layer are, in terms of the bending stress in each bamboo stripe (1) which is directed to the inner skin (3) of the tangential cut edge (3a) pertaining to the latter, oriented equidirectionally and glued together lying side by side to form the bottom layer (11) in such a way that the tangential cut edges (3a) pertaining to the inner skin (3) of the bamboo stripes (1) lie in one main surface (11 a) of the bottom layer (11) and the tangential cut edges (5a) pertaining to the outer skin (5) of the bamboo stripes (1) lie in the other main surface (11b) of the bottom layer (11), and that the accordingly structured top layer (12) is glued to the upper main surface (7) of the layer (2) inversely to the bottom layer (11) (Fig. 11).

13. Component according to claim 7, characterized in that between the first and the second layer (2, 8), at least one plywood panel (17) or chip board (17) made from bamboo and of the same horizontal projection as the layers (2, 8) is glued to same (Fig. 12).

14. Component according to claim 13, characterized in that a multitude of plywood panels (17) or chip boards (17) made from bamboo, stacked and glued together one on top of the other, is glued between the first and the second layer (2, 8) (Fig. 12).

15. Component, particularly laminated bamboo panel, consisting of a multitude of relatively thin bamboo stripes of a cross-section of the segment of a circle which are arranged basically parallel to each other and glued together to form a layer manufactured according to the process described in patent claim 1, characterized in that two identically structured layers (2, 2a) are arranged one on top of the other and glued together, in which the bamboo stripes (1) are glued together unidirectionally to form the layers (2, 2a) and in such a way that the tangential cut edges (5a and 3a) pertaining to the outer skin (5) and to the inner skin (3) of each bamboo stripe (1) are arranged to be in one of the two planes of the main surfaces (6, 6a, 7, 7a) of the layer in question (2, 2a), that the bamboo stripes (1) arranged to each other are, in terms of the tangential cut edge (3a) pertaining to the inner skin (3) of this bamboo stripe, glued together alternately oriented under a bending stress, that the bending stresses of adjoining bamboo stripes (1) of each of the layers (2, 2a) counterbalance and the layers are level on both sides without warps, that two identically structured layers constituting cover layers (15, 16) are glued inversely to each other onto both the lower and upper bearing surface (13, 14) of the structure formed by the two layers (2, 2a), that the grain of their bamboo stripes (1) is unidirectional and runs at an angle of 90° to the grain of the bamboo stripes (1) of the layered structure (2, 2a), that the bamboo stripes (1) in each layer (15, 16) are, in terms of the bending stress in each bamboo stripe (1) which is directed to the inner skin of the tangential cut edge (3a) pertaining to the latter, oriented equidirectionally and glued together lying side by side to form the layers (15, 16) and that the tangential cut edges (3a) pertaining to the inner skin (3) of the bamboo stripes (1) lie in one main surface (15a, 16a) of the layer (15, 16) and the tangential cut edges (5a) pertaining to the outer skin (5) of the bamboo stripes (1) lie in the other main surface (15b, 16b) of the layer (15, 16) (Fig. 13 and 14).

16. Component according to claim 15, characterized in that the grain of the bamboo stripes (1) of the layers (15, 16) forming the cover layers is unidirectional with the grain of the bamboo stripes (1) of the layers (2, 2a) forming the middle structure.

17. Component, particularly laminated bamboo panel, consisting of a multitude of relatively thin bamboo stripes of a cross-section of the segment of a circle which are arranged basically parallel to each other and glued together to form at least one layer manufactured according to the process described in patent claim 1, characterized in that a multitude of identically structured layers are arranged one on top of the other and glued together, that the grain of the bamboo stripes (1) of the layers (2) is unidirectional and the bamboo stripes (1) in each layer are glued together to form same in such a way that the tangential cut edges (5a, 3a) pertaining to the outer skin (5) and to the inner skin (3) of each bamboo stripe (1) each lie in one of the two planes in which the main surfaces (6, 7) of the laminated bamboo panel lie, that the bamboo stripes (1) arranged side by side are, in terms of the tangential cut edge (3a) pertaining to the inner skin (3) of each bamboo stripe, glued together alternately oriented under a bending stress, that the bending stresses of adjoining bamboo stripes of the layers (2) counterbalance and the latter are level on both sides without warps (Fig. 15).

18. Component according to claim 17, characterized in that centric the structure of the multitude of identical layers, several plywood panels or chip boards (17) are provided and glued to each other and to the adjoining layer (2).

19. Component according to claim 7 and 9, characterized in that the layer structure (9, 10) between the first and second layer (2, 8) is made up of insulating and/or filling materials (Fig. 15).

20. Component, particularly laminated bamboo panel, according to any of the claims 3 to 19, characterized in that the laminated bamboo panel is symmetrically structured.

21. Component according to any of the claims 3 to 20, characterized in that the thickness of the symmetrically structured laminated bamboo panel ranges between 15 and 30 mm, the width between 100 and 1200 mm and the length between 100 and 4000 mm.

22. Component according to any of the claims 3 to 21, characterized in that the maximum width of the bamboo stripes (1), which are precisely elaborated from the wall thickness of the bamboo cane, is equivalent to a little more than 25 mm.

23. Application of the component according to patent claims 3 to 22 manufactured by the process described in patent claim 1 for furniture, work surfaces, panes and panel for framework constructions, back walls and/or wall and ceiling wainscoting in the completion of the interior of buildings.

24. Application of the component according to claim 3 to 22 for insulation, sound and/or thermal protection purposes in the completion of the interior of buildings.

## Revendications

1. Procédé pour la fabrication d'éléments de construction contenant du bambou, en particulier de panneaux de bambou collés pouvant être utilisés pour des meubles et l'aménagement intérieur, par lequel on scie et/ou rabote à partir de tiges de bambou ayant une coupe en forme de segment de cercle, des bandes de bambou relativement fines, ayant chacune une peau intérieure et une peau extérieure, qui sont disposées au moins vers une des superpositions de couches composant l'élément de construction de façon parallèle l'une à l'autre et collées entre elles, caractérisé par le fait que chaque bande de bambou individuelle est pourvue - environ au niveau de la peau extérieure et de la peau intérieure - de plans de coupe tangentiels, tout en formant un effort de flexion dans chaque bande de bambou, qui est dirigée respectivement vers le plan de coupe tangentiel orienté vers la peu intérieure, et par le fait qu'en ce qui concerne l'effort de flexion, chaque bande de bambou est disposée et collée l'une par rapport à l'autre de façon parallèle, de façon à ce que les efforts de flexion de bandes de bambou voisines se compensent respectivement et par le fait qu'il se forme au moins une superposition de couches plane.

2. Procédé pour la fabrication d'éléments de construction contenant du bambou, en particulier de panneaux de bambou collés pouvant être utilisés pour des meubles et l'aménagement intérieur, par lequel on scie et/ou rabote à partir de tiges de bambou ayant une coupe en forme de segment de cercle, des bandes de bambou relativement fines, ayant chacune une peau intérieure et une peau extérieure, qui sont disposées au moins vers une des superpositions de couches composant l'élément de construction de façon parallèle l'une à l'autre et collées entre elles, sur lesquelles on dispose et assemble l'une sur l'autre plusieurs superpositions de couches, caractérisé par le fait que chaque bande de bambou individuelle est pourvue - environ au niveau de la peau extérieure et de la peau intérieure - de plans de coupe tangentiels, par le fait qu'il se forme un effort de flexion dans chaque bande de bambou, qui est dirigé respectivement vers le plan de coupe tangentiel orienté vers la peu intérieure, et par le fait qu'en ce qui concerne l'effort de flexion dans chaque bande de bambou, les bandes de bambou sont orientées dans le même sens l'une à côté de l'autre et collées pour former une première superposition de couches, qui sera assemblée dans le sens contraire avec une deuxième superposition de couches, fabriquée de la même manière pour former une structure composée d'au moins deux couches, de manière à ce que les courbures naturelles de chaque superposition de couches des dispositions par paires, se compensent mutuellement.

3. Elément de construction, en particulier panneau de bambou collé, composé d'une multitude de bandes de bambou ayant une coupe en forme de segment de cercle et relativement fines, disposées pour la plupart de manière parallèle l'une à l'autre et collées entre elles pour former une superposition de couches de bandes de bambou, fabriquée selon le procédé de la revendication 1, caractérisé par le fait que les bandes de bambou (1) sont collées entre elles en une superposition de couches (2) de façon à ce que le plan de coupe tangentiel (3a) orienté vers la peau intérieure (3) et le plan de coupe tangentiel (5a) orienté vers la peau extérieure (5) des bandes de bambou voisines (1) de la superposition de couches (2) sont collées entre elles, et à ce que l'effort de flexion, qui dans chaque bande de bambou est orientée vers le plan de coupe tangentiel (3a) de la peau intérieure (3), se compense et que la superposition de couches (2) est ainsi plane des deux côtés (Fig. 2).

4. Elément de construction, en particulier panneau de bambou collé, composé d'une multitude de bandes de bambou ayant une coupe en forme de segment de cercle et relativement fines, disposées pour la plupart de manière parallèle l'une à l'autre et collées entre elles pour former une superposition de couches de bandes de bambou, fabriquée selon le procédé de la revendication 1, caractérisé par le fait que les bandes de bambou (1) sont collées entre elles en une superposition de couches (2) de façon à ce que les plans de coupe tangentiels (3a et 5a) tournés vers la peau extérieure (5) et la peau intérieur (3) de chaque bande de bambou (1 ) se trouvent à l'un des deux niveaux, où se trouvent les surfaces principales (6, 7) des panneaux de bambou collés, et que les bandes de bambou (1) disposées les unes à côté des autres en ce qui concerne le plan de coupe tangentiel (3a) orienté vers la peau intérieure (3) et la peau extérieure (5) de chaque bande de bambou (1) sont orientées et collées entre elles sous un effort de flexion à tour de rôle, et que les efforts de flexion de bandes de bambou voisines (1) de la superposition de couches se compensent et que la superposition de couches (2) est plane des deux côtés sans gauchissement (Fig. 3).

5. Elément de construction, en particulier panneau de bambou collé, composé d'une multitude de bandes de bambou ayant une coupe en forme de segment de cercle et relativement fines, disposées pour la plupart de manière parallèle l'une à l'autre et collées entre elles pour former une superposition de couches de bandes de bambou, assemblée avec une seconde superposition de couches, produite conformément, fabriquée selon le procédé de la revendication 2, caractérisée par le fait que les bandes de bambou (1) sont orientées vers la première superposition de couches (2) dans la même sens, que les bandes de bambou voisines (1 ) sont collées de manière continue respectivement avec le plan de coupe (5a) orienté vers la peau extérieure (5) et le plan de coupe (3a) orienté vers la peau intérieure (3), que la deuxième superposition de couches (8), produite conformément, est collée avec la première superposition de couches (2) dans le sens opposé et que la courbure naturelle de chaque superposition de couches (2, 8), disposée par paire, se compense mutuellement (Fig. 6).

6. Elément de construction selon la revendication 5, caractérisé par le fait qu'une multitude de superpositions de couches (2, 8) sont disposées par paires dans le même sens, les unes sur les autres.

7. Elément de construction, en particulier panneau de bambou collé, composé d'une multitude de bandes de bambou ayant une coupe en forme de segment de cercle et relativement fines, disposées pour la plupart de manière parallèle l'une à l'autre et collées entre elles pour former une superposition de couches de bandes de bambou, qui est elle collée avec une deuxième superposition de couches, produite conformément, fabriquées selon le procédé de la revendication 2, caractérisée par le fait que les bandes de bambou (1), orientées - concernant leur effort de flexion dans chaque bande de bambou - vers le dernier plan de coupe tangentiel (3a) de la peau intérieure (3) dans le même sens, sont disposées l'une à côté de l'autre et collées entre elles pour former la première superposition de couches (2), et que le plan de coupe (3a) orienté vers la peau intérieure (3) des bandes de bambous (1) se trouve dans une des surfaces principales (6) de la première superposition de couches (2) et que le plan de coupe (5a) orienté vers la peau extérieure (5) se trouve dans l'autre surface principale (7) de la première superposition de couches (2), et que la deuxième superposition de couches (8) produite conformément, tournée dans le sens opposé de la première superposition de couches (2), est collée avec celle-ci et que le fibrage des bandes de bambou (1) dans les deux superposition de couches (2, 8) est unidirectionnel et la courbure naturelle dans chaque superposition de couches (2, 8), disposée par paires, se compense (Fig. 5 et 6).

8. Elément de construction selon la revendication 7, caractérisé par une multitude de superpositions de couches (2, 8) disposées par paires dans le même sens et de manière unidirectionnelle, l'une sur l'autre (Fig. 7).

9. Elément de construction selon la revendication 7, caractérisé par le fait qu'entre la première et la deuxième superposition de couches (2, 8) de l'agencement de superpositions de couches disposées par paires (2, 8), est disposée et collée avec elles une deuxième superposition de couches (9, 10) produite de manière identique à partir d'une troisième superposition de couches (9) correspondant à la première superposition de couches (2) et une quatrième superposition de couches (10) correspondant à la deuxième superposition de couches (8), et par le fait que le fibrage des bandes de bambou (1) de la troisième et quatrième superposition de couches (9, 10) a un parcours respectif à 90° par rapport au fibrage unidirectionnel de la première et de la deuxième superposition de couches (2, 8), qui forment respectivement une couche de couverture supérieure et inférieure pour la deuxième superposition de couches (9, 10) (Fig. 8)

10. Elément de construction selon la revendication 4, caractérisé par le fait que sur chaque surface principale (6, 7) de la superposition de couches (2) est collée une couche supérieur respectivement une couche inférieur (11, 12) de bandes de bambou (1), dont le fibrage est unidirectionnel les unes par rapport aux autres et posée à 90° par rapport au fibrage des bandes de bambou (1) de la superposition de couches (2), que les bandes de bambou (1) de la superposition de couches inférieure (11), orientées - concernant leur effort de flexion dans chaque bande de bambou (1) - vers le dernier plan de coupe tangentiel (3a) de la peau intérieure (3) dans le même sens et disposées l'une à côté de l'autre et collées pour former la superposition de couches inférieure (11), que le plan de coupe (3a) orienté vers la peau intérieure (3) des bandes de bambous (1) se trouve dans une des surfaces principales (11a) de la superposition de couches inférieure (11) et que le plan de coupe (5a) orienté vers la peau extérieure (5) des bandes de bambou (1) se trouve dans l'autre surface principale (11b) de la superposition de couches inférieure (11), et que la superposition de couches supérieure (12), produite conformément, est tournée dans le sens opposé de la superposition de couches inférieure (11) et collée avec la surface principale supérieure (7) de la superposition de couches (2) (Fig. 9 et 10).

11. Elément de construction selon la revendication 10, caractérisé par le fait que les bandes de bambou (1) sont collées entre elles en une superposition de couches (2) de manière à ce que la largeur des bandes de bambou (1) forme la hauteur de la superposition de couches (2), alors que la hauteur des superpositions de couches inférieures et supérieures (11 resp. 12) formant la couche de couverture de la superposition de couches (2) reste inchangée (Fig. 10).

12. Elément de construction selon la revendication 4, caractérisé par le fait que sur chaque surface principale (6, 7) de la superposition de couches (2) une superposition de couches inférieure, respectivement supérieure (11 resp. 12) de bandes de bambou (1) est collée, dont le fibrage est unidirectionnel l'une par rapport à l'autre et par rapport au fibrage des bandes de bambou (1) de la superposition de couches (2), que les bandes de bambou sont collées entre elles dans la superposition de couches (2) de manière à ce que la largeur des bandes de bambou (1) forme la hauteur de la superposition de couches (2), que les bandes de bambou (1) de la superposition de couche inférieure, orientées - concernant leur effort de flexion dans chaque bande de bambou (1) - vers le dernier plan de coupe tangentiel (3a) de la peau intérieure (3) dans le même sens, sont disposées l'une à côté de l'autre et collées entre elles pour former la superposition de couches inférieure (11), et que le plan de coupe (3a) orienté vers la peau intérieure (3) des bandes de bambous (1) se trouve dans une des surfaces principales (11a) de la superposition de couches inférieure (11) et que le plan de coupe (5a) orienté vers la peau extérieure (5) se trouve dans l'autre surface principale (11 b) de la superposition de couches inférieure (11), et que la superposition de couches supérieure (12) produite conformément, tournée dans le sens opposé de la superposition de couches inférieure (11), est collée avec la surface principale supérieure (7) de la superposition de couches (2) (Fig. 11).

13. Elément de construction selon la revendication 7, caractérisé par le fait qu'entre la première et la deuxième superposition de couches (2, 8) au moins un panneau de contreplaqué (17) ou un panneau d'agglomérés (17) en bambou ayant le même tracé que les superpositions de couches (2, 8) est collé avec celles-ci (Fig. 11).

14. Elément de construction selon la revendication 13, caractérisé par la fait qu'une multitude de panneaux de contreplaqué (17) ou de panneaux d'agglomérés (17) en bambou sont collés et disposés les uns sur les autres et collés entre la première et la deuxième superposition de couches (2, respectivement 8) (Fig. 12).

15. Elément de construction, en particulier panneau de bambou collé, composé d'une multitude de bandes de bambou ayant une coupe en forme de segment de cercle et relativement fines, disposées pour la plupart de manière parallèle les unes aux autres et collées entre elles pour former une superposition de couches de bandes de bambou, fabriquée selon le procédé de la revendication 1, caractérisé par le fait que deux superpositions de couches (2, 2a) fabriquées identiquement, sont disposées l'une sur l'autre et collées entre elles, et dans lesquelles les bandes de bambou (1) sont collées entre elles de manière unidirectionnelle pour former la superposition de couches (2, 2a), de façon à ce que les plans de coupe tangentiels (5a resp. 3a) orientés vers la peau extérieure (5) et la peau intérieure (3) de chaque bande de bambou (1) se trouvent à l'un des deux niveaux, où se trouvent les surfaces principales (6, 6a resp. 7, 7a) de la superposition de couches respective (2, 2a), que les bandes de bambous (1), disposées l'une vers l'autre, en ce qui concerne le plan de coupe tangentiel (3a), orienté vers la peau intérieure de cette bande de bambou sont orientées en alternance et collées sous un effort de flexion, et que l'effort de flexion des bandes de bambou (1) voisines de chaque superposition de couches (2, 2a) se compensent et que les superpositions de couches sont planes des deux côtés sans gauchissement, que sur la surface d'appui inférieure et supérieure (13, 14) de la construction existante, composée de deux superposition de couches (2, 2a), respectivement une superposition de couches (15,16) fabriquée de manière identique et formant une couche de couverture est collée dans le sens contraire l'une par rapport à l'autre, que le fibrage de leurs bandes de bambou (1) est unidirectionnel et posé à 90° par rapport au fibrage des bandes de bambou (1) de la construction en superposition de couches (2, 2a), que les bandes de bambou (1) dans chaque superposition de couches (15,16) sont collées entre elles et orientées - concernant leur effort de flexion dans chaque bande de bambou (1) - vers le dernier plan de coupe tangentiel (3a) de la peau intérieure (3) dans le même sens et disposées l'une à côté de l'autre, pour former la superposition de couches (15,16), et que le plan de coupe (3a) orienté vers la peau intérieure (3) des bandes de bambous (1) se trouve dans une des surfaces principales (15a resp. 16a) de la superposition de couches (15 resp. 16) et que le plan de coupe (5a) orienté vers la peau extérieure (5) des bandes de bambou (1) se trouve dans l'autre surface principale (15b resp. 16b) de la superposition de couches (15 resp. 16) (Fig. 13 et 14).

16. Elément de construction selon la revendication 15, caractérisé par la fait que le fibrage des bandes de bambou (1) est unidirectionnel dans les superpositions de couches (15, 16) formant la couche de couverture par rapport au fibrage des bandes de bambou (1) dans les superpositions de couches (2, 2a) formant la construction intermédiaire.

17. Elément de construction, en particulier panneau de bambou collé, composé d'une multitude de bandes de bambou ayant une coupe en forme de segment de cercle et relativement fines, disposées pour la plupart de manière parallèle l'une à l'autre et collées entre elles pour former une superposition de couches de bandes de bambou, fabriquée selon le procédé de la revendication 1, caractérisé par le fait que qu'une multitude de superposition de couches, fabriquée identiquement, est disposée l'une sur l'autre et collée entre elles, que le fibrage des bandes de bambou (1) dans chaque superposition de couches (2) est unidirectionnel et que les bandes de bambou (1) dans chaque superposition de couches sont collées entre elles de manière à ce que les plans de coupe tangentiels (5a resp. 3a) orientés vers la peau extérieure (5) et la peau intérieure (3) de chaque bande de bambou (1) se trouvent à l'un des deux niveaux, où se trouvent les surfaces principales (6, 7) du panneau de bambou collés, que les bandes de bambou (1) disposées les unes à côté des autres, en ce qui concerne le plan de coupe tangentiel (3a), orienté vers la peau intérieure (3) de chaque bande de bambou sont disposées de manière alternée et collées sous effort de flexion, et que l'effort de flexion des bandes de bambou (1) voisines des superpositions de couches (2) se compense et que cette dernière est plane des deux côtés sans gauchissement (Fig. 15).

18. Elément de construction selon la revendication 17, caractérisé par le fait qu'en son milieu la construction, formée à partir de la multitude de superpositions de couches identiques, sont prévues plusieurs panneaux de contreplaqué ou d'agglomérés (17) qui sont collés entre eux ainsi qu'avec la superposition de couches voisine (2).

19. Elément de construction selon les revendications 7 et 9, caractérisé par le fait que l'agencement de superpositions de couches (9, 10) entre la première et la deuxième superposition de couches (2, 8) est formé par du matériau isolant et/ ou des matières de remplissage (Fig. 15)

20. Elément de construction, en particulier panneau de bambou collé selon une des revendications de 3 à 19, caractérisé par le fait que le panneau de bambou collé est construit de façon symétrique.

21. Elément de construction, selon une des revendications de 3 à 20, caractérisé par le fait que l'épaisseur du panneau de bambou collé, construit de façon symétrique, se situe entre 15 et 30 mm, la largeur entre 100 et 1200 mm et la longueur entre 100 et 4000 mm.

22. Elément de construction selon une des revendications de 3 à 21, caractérisé par la fait que la largeur des bandes de bambou (1), qui sont fabriquées exactement à partir de l'épaisseur de la tige de bambou, correspond au maximum à à peine plus de 25 mm.

23. Utilisation de l'élément de construction, fabriqué selon le procédé des revendications 3 à 22, pour des meubles, des plans de travail, le remplage, des panneaux arrières et / ou les revêtements pour paroi et plafond dans le cadre de l'aménagement intérieur de bâtiments.

24. Utilisation de l'élément de construction selon les revendications de 3 à 22 pour l'isolation, l'insonorisation et comme revêtement calorifuge lors de l'aménagement intérieur de bâtiments.
